# EUROPÄISCHE PATENTSCHRIFT

(11) **EP 1 357 670 B1**
(45) Veröffentlichungstag und Bekanntmachung des Hinweises auf die Patenterteilung: **24.10.2007**
(21) Anmeldenummer: 03001913.7
(22) Anmeldetag: 30.01.2003
(51) Int. Cl.: H04B 1/18

(54) **Mehrkanal-Funkempfänger**
Multichannel radio receiver
Radiorécepteur avec des canaux multiples

(30) Priorität: 26.04.2002 DE 10218697
(43) Veröffentlichungstag der Anmeldung: 29.10.2003
(73) Patentinhaber: ROBERT BOSCH GMBH, 70442 Stuttgart (DE)
(72) Erfinder: Kottschlag, Gerhard, 31139 Hildesheim (DE)

(56) Entgegenhaltungen:
- EP-A- 0 333 194
- EP-A- 0 459 360
- EP-A- 0 595 314
- DE-A1- 2 840 533
- US-A- 5 321 852

## Beschreibung

Die Erfindung betrifft einen Mehrkanal-Funkempfänger mit mehreren Empfängern zum gleichzeitigen Empfang mehrerer Funkkanäle, wobei der Empfänger jeweils ein Vorfilter für das Empfangssignal hat.

Mehrkanal-Funkempfänger sind beispielsweise von Autoradios hinreichend bekannt, bei denen mehrere Funkkanäle, wie z. B. eines Senders mit Unterhaltungsprogramm und eines anderen Senders mit digitalen Verkehrsfunkinformationen, gleichzeitig empfangen und ausgewertet und/oder wiedergegeben werden.

Dabei wird das Empfangssignal vor einer ersten aktiven Verstärker- und/oder Mischerstufe zunächst durch ein passives Vorfilter geleitet, um unerwünschte Signalkomponenten aus benachbarten Frequenzbereichen zu eliminieren. Beim Wechsel der Empfangsfrequenz wird der Durchlassbereich des Vorfilters ebenfalls entsprechend geändert. Die Vorfilterung ist erforderlich, um einen möglichst großen Anteil von nicht benötigten Nachbarsignalen angrenzender Frequenzbereiche von den kritischen Empfängerbaugruppen fern zu halten. Wenn-das gesamte Empfangssignal ohne Vorfilterung die aktive Verstärker-/ Mischerstufe erreichen würde, so entstünden bei der Signalverarbeitung Störprodukte, wie z. B. Misch- und Intermodulationsprodukte, aufgrund einer nicht vollkommenen linearen Signalverarbeitung in den aktiven Bauelementen der aktiven Verstärker-/Mischerstufe.

Wenn das Empfangssignal für mehrere Funkkanäle durch ein gemeinsames Vorfilter geleitet wird, kann der Durchlassbereich so eng sein, bzw. der Frequenzabstand der beiden zu empfangenen Funkkanäle so groß sein , dass nur ein Empfangssignal eines Senders das Vorfilter passieren kann und der andere Funkkanal übermäßig stark bedämpft wird.

Es ist daher bekannt, das Empfangssignal mit einem Signalteiler aufzuteilen und in zwei getrennte Vorfilter zu leiten, wobei jeweils ein Vorfilter für einen nachfolgenden Empfänger vorgesehen ist. Dabei tritt nachteilig jedoch eine Verkopplung der beiden Vorfilter untereinander auf, was zu einer Deformation der Filterkurven führt. Zudem erfolgt eine deutliche Abschwächung des Empfangssignals für den Fall, dass die Empfangsfrequenzen der zu empfangenen Funkkanäle dicht beieinander liegen und dadurch die Filterkurven der Vorfilter überlappen.

Es ist weiterhin bekannt, Mehrkanal-Funkempfänger mit einer breitbandigen Verstärkerstufe vor einer ersten Schmalbandfilterung mit einem nachgeschalteten Entkopplungsnetzwerk vorzusehen. In dem Entkopplungsnetzwerk wird das breitbandig vorverstärkte Empfangssignal auf die Vorfilter der zugehörigen Empfänger verteilt. Die Breitband-Verstärkerstufe soll rauscharm, signalfest und dennoch stromsparend ausgebildet werden. Die mit vertretbarem Aufwand erreichbaren Empfangseigenschaften sind vielfach nicht ausreichend.

Aus EP-A-0 333 194 ist ein Rundfunkempfänger zum Empfang von Rundfunksignalen auf zwei voneinander verschiedenen Rundfunkfrequenzen angegeben. Dieser verfügt über zwei Empfangsteile, die an eine gemeinsame Empfangsantenne angeschlossen sind. Das Ausgangssignal eines ersten der beiden Empfangsteile wird als Audiosignal über Lautsprecher wiedergegeben, während das Ausgangssignal eines zweiten der beiden Empfänger einem RDS-Dekoder zugeführt wird. Durch diese Anordnung kann stets ein über eine aktuell empfangene Rundfunkfrequenz empfangenes Rundfunkprogramm wiedergegeben werden, während mit dem anderen Empfangsteil eine besser empfangbare Rundfunkfrequenz gesucht wird, über die dasselbe Rundfunkprogramm übertragen wird. Wird eine besser empfangbare Rundfunkfrequenz mit gleichem Rundfunkprogramm ermittelt, werden die Rollen der beiden Empfangsteile vertauscht, es wird also nun das über den zweiten Empfänger empfangene Rundfunksignal an die Wiedergabevorrichtung geschaltet, während das Rundfunksignal des ersten Rundfunkempfängers an den RDS-Dekoder geschaltet wird.

Aufgabe der Erfindung war es, einen verbesserten Mehrkanal-Funkempfänger zu schaffen, der bei verbesserten Empfangseigenschaften relativ kostengünstig ist. Die Aufgabe wird mit dem gattungsgemäßen Mehrkanal-Funkempfänger erfindungsgemäß gelöst durch
- einen Signalteiler zum Aufteilen des Empfangssignals und Leiten des aufgeteilten Empfangssignals jeweils in ein Vorfilter für jeden Empfänger,
- Umschaltmittel, die in Signalflussrichtung hinter die Vorfilter geklemmt sind,
- einen ersten Empfänger, der in Signalflussrichtung hinter ein erstes Vorfilter geklemmt ist,
- mindestens einen weiteren Empfänger, der jeweils in Signalflussrichtung hinter ein zugehöriges Vorfilter geklemmt ist, und
- eine Steuereinheit für die Umschaltmittel zum wahlweisen Schalten der Eingänge der weiteren Empfänger hinter das erste Vorfilter, wenn die Frequenzen, der empfangenen Funkkanäle im Durchlassbereich des ersten Vorfilters liegen, oder hinter die jeweils zugehörigen Vorfilter, wenn die Frequenzen der empfangenen Funkkanäle außerhalb des Durchlassbereich des ersten Vorfilters liegen.

Das Empfangssignal wird somit erfindungsgemäß wahlweise an zwei unterschiedlichen Stellen des Empfängers aufgeteilt. Für den Fall, dass die Empfangsfrequenzen der zu empfangenen Funkkanäle weit auseinander liegen, erfolgt die Aufteilung des Empfangssignals vor den Vorfiltern der Empfänger. Für den Fall, dass die Empfangsfrequenzen so eng beieinander liegen, dass die Empfangssignale durch ein einziges Vorfilter ohne erhebliche Bedämpfung geleitet werden können, werden die weiteren Vorfilter nicht eingesetzt und das Empfangssignal erst auf die einzelnen Empfänger aufgeteilt, nachdem es das erste gemeinsame Vorfilter passiert hat.

Dies hat den Vorteil, dass die Vorfiltereigenschaften optimal ausgenutzt werden und eine übermäßige Bedämpfung vermieden wird sowie ein Übersprechen des Empfangssignals zwischen den einzelnen Empfängerzweigen optimal reduziert wird.

Vorzugsweise werden die vorgefilterten Empfangssignale mit einem Vorverstärker verstärkt, bevor sie den zugehörigen Empfängern zugeführt werden. Hierzu ist zwischen den Vorfiltern und den Umschaltmitteln und zwischen dem ersten Vorfilter und dem ersten Empfänger jeweils ein Vorverstärker geschaltet. Für den Fall, dass ein gemeinsames Vorfilter verwendet wird, wenn die Empfangsfrequenzen der zu empfangenen Funkkanäle nah beieinander liegen, wird das gemeinsame Empfangssignal zunächst vorverstärkt, bevor es aufgeteilt wird.

Die Steuereinheit kann weiterhin zum Schalten der Umschaltmittel in Abhängigkeit von den Signalpegeln des Empfangssignals ausgebildet sein. Hierbei werden die Eingänge der weiteren Empfänger hinter die jeweils zugehörigen Vorfilter geschaltet, wenn der Signalpegel einen definierten Grenzsignalpegel überschreitet.

Wenn hohe Signalpegel anliegen ist nämlich die gegenseitige Bedämpfung der Vorfilter unerheblich, so dass die verfügbaren Vorfilter gleichzeitig verwendet werden können, ohne dass die eine erhebliche Qualitätseinbuße zur Folge hat. Dabei ist vorteilhaft, dass die Verstärkungseinstellung der einzelnen Vorverstärker optimal auf die jeweiligen Signalpegel der Empfangssignale eingestellt werden können und somit einen Einfluss der Verstärkungsregelung auf die anderen Empfangssignale vermieden wird.

Die Vorfilter sind vorzugsweise abstimmbar. Hierzu sind die Steuermittel zur Einstellung jeweils einer auf die zugehörigen Frequenzbereiche der Funkkanäle der einzelnen Vorfilter abgestimmten Filterkurve ausgebildet, wenn die Empfänger jeweils hinter die zugehörigen Vorfilter geschaltet sind. Die einzelnen Vorfilter werden somit optimal, vorzugsweise auf eine Mittenfrequenz der jeweiligen Funkkanäle abgestimmt. Auf der anderen Seite können die Steuermittel zur Einstellung einer Filterkurve des gemeinsam genutzten Vorfilters ausgebildet sein, die zum optimierten Durchlass aller zu empfangenen Funkkanäle geeignet ist, wenn die Empfänger an das gemeinsame erste Vorfilter geschaltet sind. Es wird somit eine Kompromissfilterkurve eingestellt, die alle Funkkanäle möglichst wenig beeinträchtigt.

Die Filtermittenfrequenz der Filterkurve ist hierzu vorzugsweise der Mittelwert der empfangenen Funkkanäle. Die Einstellung der Filterkurve kann dabei mit dem Mittelwert der Abstimmspannung der Empfänger erfolgen.

Die Erfindung wird nachfolgend anhand der beigefügten Zeichnungen näher erläutert. Es zeigen:
Figur 1 - Blockschaltbild einer ersten Ausführungsform eines erfindungsgemäßen Mehrkanal-Funkempfängers;
Figur 2 - Blockschaltbild einer zweiten Ausführungsform des erfindungsgemäßen Mehrkanal-Funkempfängers.

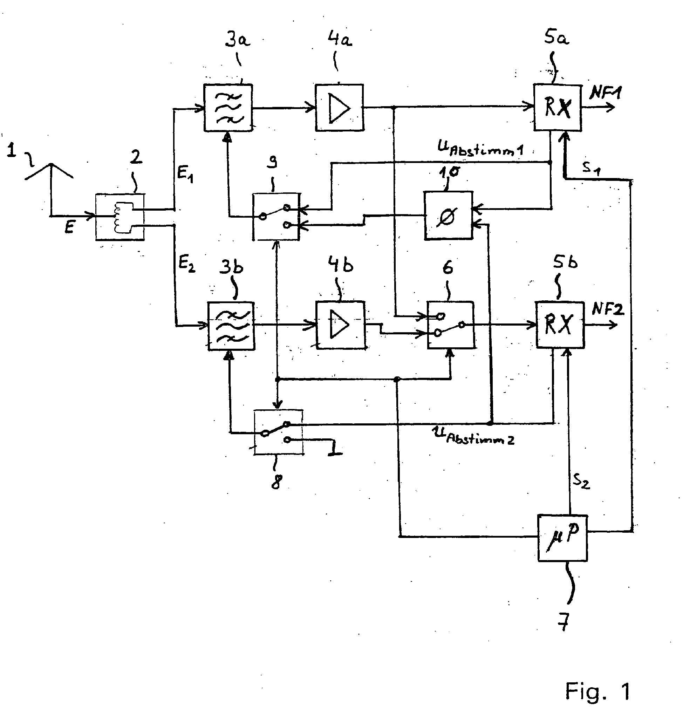

Die Figur 1 lässt eine erste Ausführungsform eines erfindungsgemäßen Mehrkanal-Funkempfängers als Blockschaltbild erkennen.

Ein von einer Antenne 1 empfangenes Empfangssignal E wird einem Signalteiler 2 zugeführt, der das Empfangssignal E in mindestens 2 Empfangssignale E₁, E₂ aufteilt. Die aufgeteilten Empfangssignale E₁, E₂ werden jeweils in ein zugehöriges Vorfilter 3a, 3b geleitet, wobei an dem Ausgang der Vorfilter 3a, 3b jeweils ein Vorverstärker 4a, 4b geklemmt ist. Das vorverstärkte erste Empfangssignal E₁ wird einem ersten Empfänger 5a zugeführt.

Erfindungsgemäß sind Umschaltmittel 6 vorgesehen, die mit ihrem Eingang jeweils an den Ausgang des ersten Vorverstärkers 4a und des zweiten Vorverstärkers 4b geklemmt sind. Der Ausgang der Umschaltmittel 6 ist an den zweiten Empfänger 5b geklemmt, der für einen zweiten zu empfangenden Funkkanal vorgesehen ist, beispielsweise einem Verkehrsfunkdecoder.

Die Umschaltmittel 6 werden durch eine Steuereinheit 7 so gesteuert, dass der Eingang des zweiten Empfängers 5b einen Ausgang des ersten Vorverstärkers 4a und damit hinter das erste Vorfilter 3a geklemmt ist, wenn die Frequenzen der von den Empfängern 5a und 5b zu empfangenden Funkkanäle beide im Durchlassbereich des ersten Vorfilters 3a liegen.

Für den Fall, dass die Frequenzen der von den Empfängern 5a und 5b zu empfangenden Funkkanäle außerhalb des Durchlassbereichs des ersten Vorfilters 3a liegen, werden die Umschaltmittel 6 durch die Steuereinheit so geschaltet, dass der zweite Empfänger 5b an den Ausgang des zweiten Vorverstärkers 4b und damit hinter das zweite Vorfilter 3b geschaltet ist.

Auf diese Weise wird das Empfangssignal E im Ergebnis wahlweise an zwei unterschiedlichen Stellen des Mehrkanal-Funkempfängers aufgeteilt, nämlich vor den beiden Vorfiltern 3a und 3b der zugehörigen Empfänger 5a und 5b, wenn die Empfangsfrequenzen der zu empfangenden Funkkanäle weit auseinander liegen und hinter dem ersten Vorfilter 3a, wenn die beiden Empfangsfrequenzen der zu empfangenden Funkkanäle so eng beieinander liegen, dass beide Empfangssignale durch ein einziges Vorfilter 3a passen.

Für den Fall, dass das gemeinsame erste Vorfilter 3a für die zu empfangenden Funkkanäle verwendet wird, wird das zweite Vorfilter 3b mit Schaltmitteln 8 auf Masse gelegt und damit inaktiviert. Das erste Vorfilter 3a wird über Schaltmittel 9 so angesteuert, dass die Abstimmung des Vorfilters 3a mit dem Mittelwert der Abstimmspannungen U_{Abstimm1}, U_{Abstimm2} des ersten Empfängers 5a und des zweiten Empfängers 5b erfolgt. Hierzu ist eine entsprechende Mittelwertberechnungseinheit 10 an die entsprechenden Steuerausgänge der Empfänger 5a, 5b geklemmt.

Auf diese Weise wird die Filtermittenfrequenz der Filterkurve des Vorfilters 3a auf dem Mittelwert der zu empfangenden Funkkanäle eingestellt.

Für den Fall, dass die Frequenzen der empfangenen Funkkanäle außerhalb des Durchlassbereichs des ersten Vorfilters 3a liegen und die Eingänge der Empfänger 5a, 5b mit den Umschaltmitteln 6 hinter die jeweils zugehörigen Vorfilter 3a, 3b geklemmt sind, erfolgt die Abstimmung der Vorfilter 3a, 3b jeweils mit den Abstimmspannungen U_{Abstimm1}, U_{Abstimm2} des ersten Empfängers 5a bzs. des zweiten Empfängers 5b.

Die Auswahl der Empfangsfrequenzen für die zu empfangenden Funkkanäle erfolgt über Steuerungsleitungen S1, S2 von der Steuereinheit 7, die als Mikroprozessor ausgeführt ist.

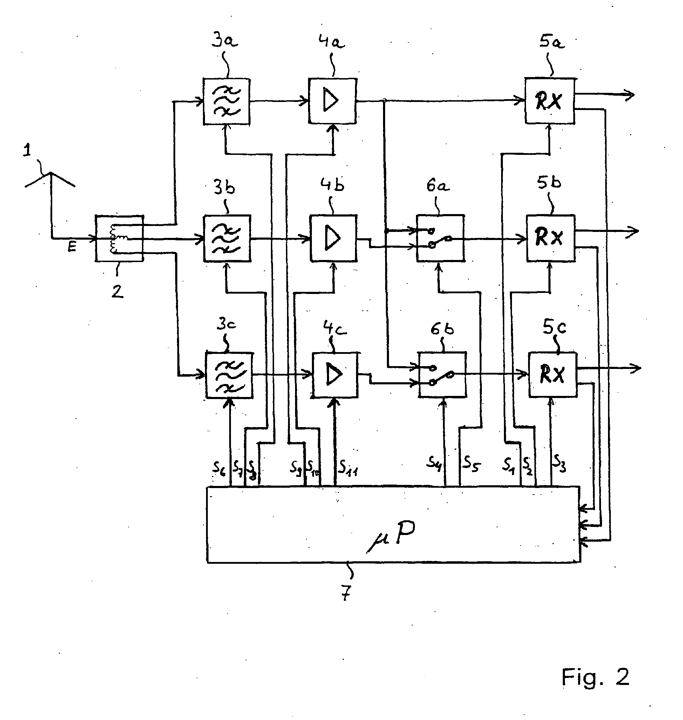

Die Figur 2 lässt eine zweite Ausführungsform des erfindungsgemäßen Mehrfrequenz-Funkempfängers mit 3 Empfängern 5a, 5b, 5c zum gleichzeitigen Empfangen von drei Funkkanälen erkennen. Jeder Empfänger 5a, 5b, 5c ist jeweils hinter eine Reihenschaltung aus Vorfilter 3a, 3b, 3c und Vorverstärker 4a, 4b, 4c geschaltet. Das Empfangssignal E wird über einen Signalteiler auf die drei Vorfilter 3a, 3b, 3c aufgeteilt.

Die Umschaltmittel 6 sind in dieser Ausführungsform als zwei Umschalter 6a, 6b ausgeführt, um mit dem Umschalter 6a wahlweise den Ausgang des ersten Vorverstärkers 4a oder des zweiten Vorverstärkers 4b an den Eingang des zweiten Empfängers 5b und mit dem zweiten Umschalter 6b wahlweise den Ausgang des ersten Vorverstärkers 4a oder des dritten Vorverstärkers 4c an den Eingang des dritten Empfängers 5c zu schalten.

Die Steuerung der Umschaltmittel 6 erfolgt mit der als Mikroprozessor ausgeführten Steuereinheit 7 über entsprechende Steuerleitungen S4 und S5.

Die Einstellung der Empfangsfrequenzen der Empfänger 5a, 5b, 5c erfolgt ebenfalls über Steuerleitungen S1, S2 und S3 über die Steuereinheit 7.

Ebenso werden die Filterkurven der Vorfilter 3a, 3b und 3c mit Signalen der Steuereinheit 7 über Steuerleitungen S6, S7 und S8 eingestellt. Bei einer gemeinsamen Nutzung des ersten Vorfilters 3a für mindestens 2 Empfangskanäle wird eine Filterkurve eingestellt, durch die alle betroffenen Empfangskanäle nicht übermäßig bedämpft werden.

Weiterhin sind Steuerleitungen S9, S10 und S11 der Steuereinheit 7 vorgesehen, um die Verstärkerspannung der Vorverstärker 4a, 4b, 4c individuell einzustellen.

Die dargestellte Ausführungsform hat den Vorteil, dass die Einstellung der Vorfilter 3, der Vorverstärker 4 der Umschaltmittel 6 frei wählbar durch Programmierung erfolgen kann. Dabei kann auch beispielsweise das erste Vorfilter 3a gemeinsam nur für das erste und das dritte Empfangssignal genutzt werden, während das zweite Vorfilter 3b separat für das zweite Empfangssignal an den zweiten Empfänger 5b geschaltet wird.

Die Steuereinheit 7 erhält über die Signalleitungen P1, P2 und P3 Informationen über die Nutzsignal-Pegel der drei Empfänger 5a, 5b, 5c. Dies hat den Vorteil, dass die Steuereinheit 7 die Umschaltung in Abhängigkeit der Empfangssituation unterschiedlich gestalten kann.

## Patentansprüche

1. Mehrkanal-Funkempfänger mit mehreren Empfängern (5) zum gleichzeitigen Empfang mehrerer Funkkanäle, wobei jeder Empfänger (5) jeweils ein Vorfilter (3) für das Empfangssignal (E) hat mit
- einem Signalteiler (2) zum Aufteilen des Empfangssignals (E) und Leiten des aufgeteilten Empfangssignals (E) jeweils in ein Vorfilter (3) für jeden Empfänger (5),
- Umschaltmitteln (6), die in Signalflussrichtung hinter die Vorfilter (3) geklemmt sind,
- einem ersten Empfänger (5a), der in Signalflussrichtung hinter ein erstes Vorfilter (3a) geklemmt ist,
- mindestens einem weiteren Empfänger (5b, 5c), der jeweils in Signalflussrichtung hinter ein zugehöriges Vorfilter (3b, 3c) geklemmt ist, und **gekennzeichnet durch**
- einer Steuereinheit (7) für die Umschaltmittel (6) zum wahlweisen Schalten der Eingänge der weiteren Empfänger (5b, 5c) hinter das erste Vorfilter (3a), wenn die Frequenzen, der empfangenen Funkkanäle im Durchlassbereich des ersten Vorfilters (3) liegen, oder hinter die jeweils zugehörigen Vorfilter (3b, 3c), wenn die Frequenzen der empfangenen Funkkanäle außerhalb des Durchlassbereichs des ersten Vorfilters (3a) liegen.

2. Mehrkanal-Funkempfänger nach Anspruch 1, **dadurch gekennzeichnet, dass** zwischen den Vorfiltern (3) und den Umschaltmitteln (6) und zwischen den Vorfiltern (3a) und den Empfängern (5) jeweils ein Vorverstärker (4a) geschaltet ist.

3. Mehrkanal-Funkempfänger nach Anspruch 1 oder 2, **dadurch gekennzeichnet, dass** die Steuereinheit (7) zum Schalten der Umschaltmittel (6) in Abhängigkeit von den Signalpegeln des Empfangssignals ausgebildet ist, wobei die Eingänge der weiteren Empfänger hinter die jeweils zugehörigen Vorfilter (3) geschaltet werden, wenn der Signalpegel einen definierten Grenzsignalpegel überschreitet.

4. Mehrkanal-Funkempfänger nach einem der vorhergehenden Ansprüche, **dadurch gekennzeichnet, dass** die Vorfilter (3) abstimmbar sind, wobei die Steuereinheit (7) jeweils eine auf die zugehörigen Frequenzbereiche der Funkkanäle der einzelnen Vorfilter (3) abgestimmte Filterkurve, wenn die Empfänger jeweils hinter die zugehörigen Vorfilter (3) geschaltet sind.

5. Mehrkanal-Funkempfänger nach einem der vorhergehenden Ansprüche, **dadurch gekennzeichnet, dass** die Vorfilter (3) abstimmbar sind, wobei die Steuereinheit (7) eine Filterkurve des gemeinsam genutzten Vorfilters (3) eingestellt ist, die zum optimierten Durchlass aller zu empfangenen Funkkanäle geeignet ist, wenn die Empfänger (5) an das gemeinsame erste Vorfilter (3a) geschaltet sind.

6. Mehrkanal-Funkempfänger nach Anspruch 5, **dadurch gekennzeichnet, dass** die Filtermittenfrequenz der Filterkurve der Mittelwert der zu empfangenen Funkkanäle ist.

7. Mehrkanal-Funkempfänger nach Anspruch 5 oder 6, **dadurch gekennzeichnet, dass** die Einstellung der Filterkurve mit dem Mittelwert der Abstimmspannungen der Empfänger (5) erfolgt.

8. Mehrkanal-Funkempfänger nach Anspruch 5, **dadurch gekennzeichnet, dass** die Einstellung der Filterkurve in Abhängigkeit der Empfangspegel der nachfolgenden Empfänger (5) erfolgt.

## Claims

1. Multichannel radio receiver having a plurality of receivers (5) for simultaneously receiving a plurality of radio channels, where each receiver (5) respectively has an input filter (3) for the received signal (E), having
- a signal splitter (2) for splitting the received signal (E) and routing the split received signal (E) respectively to an input filter (3) for each receiver (5),
- changeover means (6) which are clamped downstream of the input filters (3) in the direction of signal flow,
- a first receiver (5a) which is clamped downstream of a first input filter (3a) in the direction of signal flow,
- at least one further receiver (5b, 5c) which is respectively clamped downstream of an associated input filter (3b, 3c) in the direction of signal flow, and
**characterized by**
- a control unit (7) for the changeover means (6) for selectively connecting the inputs of the further receivers (5b, 5c) downstream of the first input filter (3a) when the frequencies of the received radio channels are in the passband of the first input filter (3) or downstream of the respective associated input filters (3b, 3c) when the frequencies of the received radio channels are outside the passband of the first input filter (3a).

2. Multichannel radio receiver according to Claim 1, **characterized in that** a respective preamplifier (4a) is connected between the input filters (3) and the changeover means (6) and between the input filters (3a) and the receivers (5).

3. Multichannel radio receiver according to Claim 1 or 2, **characterized in that** the control unit (7) is designed to switch the changeover means (6) on the basis of the signal levels of the received signal, with the inputs of the further receivers being connected downstream of the respective associated input filters (3) when the signal level exceeds a defined signal level.

4. Multichannel radio receiver according to one of the preceding claims, **characterized in that** the input filters (3) are tuneable, with the control unit (7) respectively setting a filter curve tuned to the associated frequency ranges of the radio channels of the individual input filters (3) when the receivers are respectively connected downstream of the associated input filters (3).

5. Multichannel radio receiver according to one of the preceding claims, **characterized in that** the input filters (3) are tuneable, with the control unit (7) setting a filter curve for the jointly used input filter (3) which is suitable for optimized passing of all radio channels to be received when the receivers (5) are connected to the shared first input filter (3a).

6. Multichannel radio receiver according to Claim 5, **characterized in that** the filter centre frequency for the filter curve is the mean value from the radio channels which are to be received.

7. Multichannel radio receiver according to Claim 5 or 6, **characterized in that** the filter curve is set using the mean value from the tuning voltages for the receivers (5).

8. Multichannel radio receiver according to Claim 5, **characterized in that** the filter curve is set on the basis of the reception levels of the subsequent receivers (5).

## Revendications

1. Radio récepteur multi canaux comportant plusieurs récepteurs (5) pour la réception simultanée de plusieurs canaux radio, chaque récepteur (5) ayant un pré-filtre (3) pour le signal de réception (E), comprenant :
- un diviseur de signal (2) pour diviser le signal reçu (E) et conduire les signaux de réception (E) divisés chaque fois dans un pré-filtre (3) pour chacun des récepteurs (5) ;
- des moyens de commutation (6) branchés en aval du pré-filtre (3) dans le sens de passage du signal ;
- un premier récepteur (5a) branché derrière un premier pré-filtre (3a) dans le sens de passage du signal ;
- au moins un autre récepteur (5b, 5c) branché chaque fois dans la direction de passage du signal derrière un pré-filtre correspondant (3b, 3c),
**caractérisé par**
une unité de commande (7) pour les moyens de commutation (6) pour commuter sélectivement les entrées des autres récepteurs (5b, 5c) derrière le premier pré-filtre (3a) si les fréquences des canaux radio reçues se situent dans la plage passante du premier pré-filtre (3) ou derrière les pré-filtres (3b, 3c) respectifs si les fréquences des canaux radio reçues se situent à l'extérieur de la plage passante du premier pré-filtre (3a).

2. Radio récepteur multi canaux selon la revendication 1,
**caractérisé par**
un pré-amplificateur (4a) respectif entre les pré-filtres (3) et les moyens de commutation (6) et entre les pré-filtres (3a) et les récepteurs (5).

3. Radio récepteur multi canaux selon les revendications 1 ou 2,
**caractérisé en ce que**
l'unité de commande (7) est réalisée pour commuter les moyens de commutation (6) en fonction du niveau des signaux reçus, les entrées des autres récepteurs étant branchées chaque fois derrière un pré-filtre correspondant (3) si le niveau du signal dépasse un niveau prédéfini de signal limite.

4. Radio récepteur multi canaux selon l'une des revendications précédentes,
**caractérisé en ce que**
les pré-filtres (3) peuvent être accordés, l'unité de commande (7) définissant chaque fois une courbe de filtre accordée pour la plage de fréquences correspondante des canaux radio des différents pré-filtres (3) lorsque le récepteur est branché en aval du pré-filtre (3) correspondant.

5. Radio récepteur multi canaux selon l'une quelconque des revendications précédentes,
**caractérisé en ce que**
les pré-filtres (3) sont accordés et l'unité de commande (7) règle une courbe de filtre du pré-filtre (3) utilisé en commun, cette courbe convenant pour permettre le passage optimisé de tous les canaux radio à recevoir si les récepteurs (5) sont branchés sur un premier pré-filtre (3a) commun.

6. Radio récepteur multi canaux selon la revendication 5,
**caractérisé en ce que**
la fréquence centrale de la courbe du filtre est la valeur moyenne des canaux radio à recevoir.

7. Radio récepteur multi canaux selon la revendication 5 ou 6,
**caractérisé en ce qu'**
on règle la courbe de filtre avec la valeur moyenne des tensions d'accord des récepteurs (5).

8. Radio récepteur multi canaux selon la revendication 5,
**caractérisé en ce que**
le réglage de la courbe de filtre se fait en fonction du niveau de réception des récepteurs (5) en aval.
